# EUROPEAN PATENT APPLICATION

(11) **EP 0 973 223 A1**
(43) Date of publication of application: **19.01.2000**
(21) Application number: 98901513.6
(22) Date of filing: 05.02.1998
(51) Int. Cl.: H01M 10/40

(54) **LITHIUM BATTERY AND METHOD FOR MANUFACTURING THE SAME**

(71) Applicant: MITSUBISHI DENKI KABUSHIKI KAISHA, Tokyo 100-8310 (JP)
(72) Inventor: YOSHIDA, Yasuhiro, Mitsubishi Denki, Chiyoda-ku, Tokyo 100-8310 (JP); MURAI, Michio, Mitsubishi Denki, Chiyoda-ku, Tokyo 100-8310 (JP); INUZUKA, Takayuki, Mitsubishi Denki, Chiyoda-ku, Tokyo 100-8310 (JP); AIHARA, Shigeru, Mitsubishi Denki, Chiyoda-ku, Tokyo 100-8310 (JP); TAKEMURA, Daigo, Mitsubishi Denki, Chiyoda-ku, Tokyo 100-8310 (JP); SHIOTA, Hisashi, Mitsubishi Denki, Chiyoda-ku, Tokyo 100-8310 (JP); ARAGANE, Jun, Mitsubishi Denki, Chiyoda-ku, Tokyo 100-8310 (JP); URUSHIBATA, Hiroaki, Mitsubishi Denki, Chiyoda-ku, Tokyo 100-8310 (JP); HAMANO, Kouji, Mitsubishi Denki, Chiyoda-ku, Tokyo 100-8310 (JP)
(74) Representative: Sajda, Wolf E., Dipl.-Phys.
(86) International application number: JP9800471
(87) International publication number: WO9940645

(57) **Abstract**

An object of the invention is to provide a lithium ion battery which is compact and yet hardly develops a short-circuit between electrodes and a process for producing the same with ease. The process comprises the steps of separately fixing separators (10 and 20) to a positive electrode (1) and a negative electrode (2) so as to cover at least the surfaces facing each other and of fixing the separator-covered positive and negative electrodes together with their separators in contact with each other. Since the facing sides of the positive and the negative electrodes have been covered with the respective separators before superposition, they can be positioned with little misregister. Even in case they are superposed out of register, a short-circuit hardly occurs between them because their facing sides are covered with the separators. There is no need to make the separators larger in size than the electrodes. The battery comprises a laminate electrode body having a positive electrode, a negative electrode, at least two separators between the positive and the negative electrodes, and an adhesive layer (3) between each of the positive and the negative electrodes and the respective separators and between the two separators. Where the battery is designed to be of laminate battery body type having a plurality of laminate electrodes, a practical lithium ion battery which is compact and yet hardly develops a short-circuit and has a large capacity can be produced easily.

## Description

### Technical Field

This invention relates to a lithium ion battery comprising a positive electrode and a negative electrode facing each other via a separator holding an electrolytic solution. More particularly, it relates to a process for producing a battery structure having a positive electrode, a negative electrode, and a separator adhered to each other.

### Background of the Invention

There has been an extraordinary demand for reduction in size and weight of portable electronic equipment, and the realization relies heavily on improvement of battery performance. To meet the demand, development and improvement of batteries from various aspects have been proceeding. Characteristics required of batteries include a high voltage, a high energy density, safety, and freedom of shape design. Of conventional batteries, lithium ion batteries are the most promising secondary batteries for realizing a high voltage and a high energy density and are still under study for further improvements.

A lithium ion battery mainly comprises a positive plate, a negative plate, and an ion conducting layer interposed therebetween. The lithium ion batteries that have been put to practical use employ a positive plate prepared by applying to a current collector a powdered active material, such as a lithium-cobalt oxide, a negative plate similarly prepared by applying to a current collector a powdered carbonaceous active material, and a separator interposed as an ion conducting layer which is made of a porous film of polypropylene, etc. and is filled with a nonaqueous electrolytic solution.

As a means for maintaining electrical and mechanical connections among the positive electrode, the separator, and the negative electrode in a currently available lithium ion battery, U.S. Patent 5,437,692 discloses a structure in which electrodes are joined to a separator with a liquid adhesive mixture, and U.S. Patent 5,456,000 teaches a method in which a current collector, a separator, and an electrode are integrally laminated.

Both the above-mentioned conventional techniques are concerned with a battery structure having a positive electrode and a negative electrode positioned on each side of one separator. That is, there is involved a danger that a short-circuit can occur between the positive and negative electrodes in case they are improperly positioned. Such a danger is generally prevented by making the size of the separator larger than that of electrodes, which has hindered batteries from being made compact. Moreover, it is not easy to position a positive electrode and a negative electrode on the respective sides of a separator in register.

The invention has been completed in order to solve the above-described problems. An object of the invention is to provide a lithium ion battery that is compact and yet hardly develops a short-circuit between electrodes and a process for producing the same with ease.

### Disclosure of the Invention

A first process for producing a lithium ion battery according to the invention is a process for producing a lithium ion battery having a positive electrode and a negative electrode facing each other via a separator, which comprises the steps of separately fixing separators to a positive electrode and a negative electrode so as to cover at least the surfaces facing each other and of fixing the separator-covered positive and negative electrodes together with their separators in contact with each other. Since the facing sides of the positive and the negative electrodes have been covered with the respective separators before superposition, they can be positioned with little misregister. Even in case they are superposed out of register, a short-circuit hardly occurs between them because their facing sides are covered with the separators. There is no need to make the separators larger in size than the electrodes.

A second process for producing a lithium ion battery according to the invention is the above-described first process, wherein the positive and the negative electrodes and the respective separators are fixed together by adhesion. According to this mode, sliding between the electrodes and the respective separators is prevented.

A third process for producing a lithium ion battery according to the invention is the above-described second process, wherein the adhesion between the positive and the negative electrodes and the respective separators is carried out with a homo- or copolymer of vinylidene fluoride or vinyl alcohol. A homo- or copolymer of vinylidene fluoride or vinyl alcohol is preferred, for they are sparingly soluble in an electrolytic solution and therefore stable.

A fourth process for producing a lithium ion battery according to the invention is the above-described first process, wherein the separators in contact with each other are adhered to each other. According to this mode, the separators hardly slide.

A fifth process for producing a lithium ion battery according to the invention is the above-described fourth process, wherein the separators are adhered to each other via a film having a plurality of holes. Because the parts corresponding to the holes remain non-adhered, not all the open cells of the separators are covered with an adhesive. Accordingly, adverse influences on ion conduction are prevented.

A sixth process for producing a lithium ion battery according to the invention is the above-described fourth process, wherein adhering the separators to each other is carried out by applying heat and pressure. Requiring no adhesive, the production process can be simplified.

A first lithium ion battery according to the invention comprises a laminate electrode body having a positive electrode, a negative electrode, at least two separators between the positive and the negative electrodes, and an adhesive layer between each of the positive and the negative electrodes and the respective separators and between the two separators.

A second lithium ion battery according to the invention is the above-described first battery which has a plurality of laminate electrode bodies.

A third lithium ion battery according to the invention is the above-described second battery, wherein the plurality of laminate electrode bodies are formed by alternately building up a positive electrode and a negative electrode each having a separator on both sides thereof.

A fourth lithium ion battery according to the invention is the above-described second battery, wherein the plurality of laminate electrode bodies are formed by rolling up a positive electrode and a negative electrode each having a separator on both sides thereof in such a manner that positive electrodes and negative electrodes alternate in the laminate.

The structures of the first to fourth lithium ion batteries have the following advantages. The positive and negative electrodes are superposed on each other after covering their facing sides with the respective separators. Thus the laminate electrode body can be prepared with little misregister. Even in case they are superposed out of register, a short-circuit hardly occurs between them because their facing sides have been covered with the separators. There is no need to make the separators larger in size than the electrodes. Therefore, where a battery is designed to be of laminate battery body type having a plurality of laminate electrodes, a practical lithium ion battery which is compact and yet hardly develops a short-circuit and has a large capacity can be produced easily.

### Brief Description of the Drawings

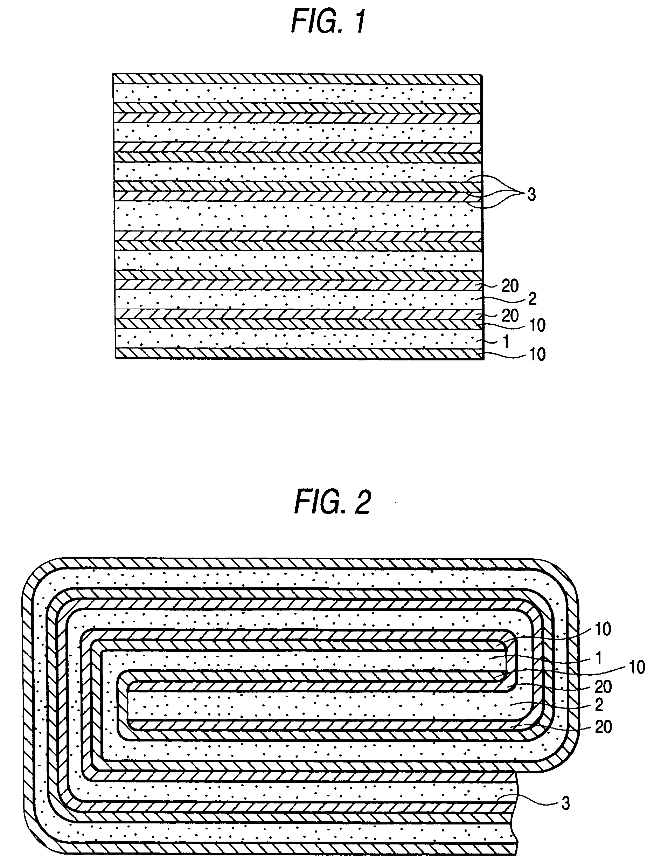

Figs. 1 and 2 are each a schematic cross section illustrating the main part of a lithium ion battery according to one mode for carrying out the invention.

### Best Mode for Carrying out the Invention

The modes for carrying out the invention will be explained by referring to the accompanying drawings.

Figs. 1 and 2 are each a schematic cross section illustrating the main part of a lithium ion battery according to a mode for carrying out the invention, wherein numerals 1, 2, 10, and 20 indicate a positive electrode, a negative electrode, a separator fixed to the positive electrode, and a separator fixed to the negative electrode, respectively. Numeral 3 is an adhesive layer. The battery has a plurality of laminate electrode bodies each having at least two separators 10 and 20 between the positive electrode 1 and the negative electrode 2 and an adhesive layer 3 between the positive electrode 1 and the separator 10, between the negative electrode 2 and the separator 20, and between the two separators 10 and 20.

Fig. 1 shows a structure in which a positive electrode 1 having a separator 10 adhered to both sides thereof and a negative electrode 2 having a separator 20 adhered to both sides thereof are alternately built up with the adjacent separators being adhered to each other. Fig. 2 shows a structure in which a positive electrode 1 of band form having a separator 10 adhered to both sides thereof and a negative electrode 2 of band form having a separator 20 adhered to both sides thereof are rolled up in such a manner that positive electrodes 1 and negative electrodes 2 alternate in the laminate, while adhering the adjacent separators to each other.

The process for producing a lithium ion battery according to one mode for carrying out the invention is a process for producing a lithium ion battery having a positive electrode and a negative electrode facing each other via a separator as shown, for example, in Figs. 1 and 2, which comprises the steps of separately fixing separators 10 and 20 to a positive electrode 1 and a negative electrode 2, respectively, to cover at least the surface facing each other and of fixing the positive and negative electrodes 1 and 2 covered with the respective separators 10 and 20 together with their separators in contact with each other. Since the facing sides of the positive and the negative electrodes 1 and 2 have previously been covered with the separators 10 and 20, respectively, they can be superposed with little misregister. Even in case they are superposed out of register, a short-circuit hardly occurs between them because their facing sides are previously covered with the separators. Further, there is no need to make the separators larger in size than the electrodes.

The manner of covering the positive and negative electrodes with the respective separators is not restricted provided that each separator is fixed to the electrode and that at least the area of the active material surface of the positive or negative electrode that faces the opposite electrode is covered. For example, the electrode can be enveloped in the separator, or the electrode can be sandwiched in between a pair of separators, which are adhered to each other around the periphery of the electrode.

Fixing of the positive and negative electrodes and the respective separators can be strengthened by adhering them. While the manner of adhering is not particularly limited, it is desirable that ion conductivity be sufficiently secured and that the adhesive interface be free from non-uniformity, such as coating unevenness of an adhesive applied. If ion conductivity is insufficient or if there is adhesive coating unevenness, battery characteristics such as charge and discharge characteristics are deteriorated Various adhesives that do not dissolve in an electrolytic solution can be used. While not limiting, useful adhesives include synthetic rubber resins, solvent type adhesives such as resins containing polyvinyl alcohol in the main chain thereof, and reactive adhesives such as epoxy resins and urethane resins. In particular, a homo- or copolymer of vinylidene fluoride or vinyl alcohol is preferred, for they hardly react with an electrolytic solution and are therefore stable. While not limiting, copolymers of vinylidene fluoride include those obtained by copolymerizing vinylidene fluoride with fluorine-containing monomers, such as hexafluoropropylene and tetrafluoroethylene. Other organic high-molecular compounds, organic low-molecular compounds, inorganic compounds, and the like can be mixed into the homo- or copolymer of vinylidene fluoride or vinyl alcohol unless they adversely affect the battery characteristics.

The positive and the negative electrodes both having their surfaces covered with the respective separators are superposed in such a manner that the negative electrode active material layer and the positive electrode active material layer may face each other. They can be superposed to form a stack of tabular electrode bodies as illustrated in Fig. 1, a roll structure as shown in Fig. 2, or a combination thereof. The battery may be of single layer structure having one laminate electrode body. It is necessary that the positive electrode and the negative electrode be superposed with as small a gap as possible therebetween.

Fixing of superposed adjoining separators can be achieved by, for example, fixing the electrodes by means of a case, a band, tape, etc. For preventing sliding between the separators, it is more effective to adhere the separators to each other

The adjoining separators can be adhered together only at the peripheral portion thereof or over the entire surface thereof. In general, the adhered portion of the separators tends to undergo reduction in ion conductivity. In such a case, adhesion is preferably made in such a manner that adhesive areas of 5 mm² or less are distributed over the entire facing surfaces of the separators, or an adhesion method securing ion conductivity is adopted, or adhesion is preferably made in areas other than the area where the active material is. If portions having no ion conductivity are present in the area corresponding to the active material surface, the battery characteristics will be adversely affected.

Where the separators are adhered, the ratio of the total area of through-holes of the separator to the entire surface area tends to be reduced. It is desirable that the ratio of the total area of through-holes to the entire surface area after adhesion be at least 10%, particularly 30% or more.

Where the separators are adhered via a film having a plurality of holes, the part of the separators corresponding to the holes remains non-adhered. It is thus possible to avoid clogging of all the pores of the separators with an adhesive, which may adversely affect the ion conductivity. The film to be interposed should have surfaces capable of adhering to the separator and be insoluble in the electrolytic solution used. Useful films include a porous film, a net, etc. made of thermoplastic resins (e.g., polypropylene or polyethylene) or heat-crosslinkable resins.

Adhesion of adjoining separators can also be carried out by heat and pressure application. Requiring no adhesive, this method brings about simplification of the production process. The adhesion may be made on either only the peripheral portion or the entire surface of the separators. While not limiting, useful means of heat and pressure application include a press and a roll. The heating temperature preferably ranges from 50°C to 120°C. At 50°C or lower temperatures, adhesion is difficult. At 120°C or higher temperatures, the separators may be damaged. A proper pressure, which is dependent on temperature, is in a range of from 5 to 150 kg/cm². Unevenness in pressure application is desirably as small as possible. Under too small a pressure, the separators are not brought into sufficient contact, failing to be adhered satisfactorily. Under too large a pressure, the porous structure of the separators is destroyed to impair the battery function

Any insulating separator that has sufficient strength, such as porous film, net, and nonwoven fabric, can be used. While not limiting, a porous film made of polyethylene, polypropylene, etc. is preferably used for adhesiveness and safety. In order to secure ion conductivity, the separator is required to have through-holes. It is desirable that the ratio of the total area of through-holes to the entire surface area be at least 10%, particularly 30% or more.

The electrodes which can be used include those composed of an active material applied onto a current collector. The active material for a positive electrode includes an oxide or a chalcogenide of a transition metal, such as cobalt, manganese or nickel; complex compounds thereof; and these compounds containing various dopant elements. The active material for a negative electrode preferably includes carbonaceous materials. Any carbonaceous material can be employed in the invention irrespective of its chemical characteristics. These active materials are used in a particulate form. Particles of 0.3 to 20 µm in size can be used. A preferred particle size is 1 to 5 µm. If the particle size is too small, the surface area of the active material layer to be coated with the adhesive becomes too large. It follows that lithium intercalation and disintercalation in charging and discharging are not carried out efficiently, resulting in reduction of battery characteristics. Too large active material particles are not easy to make into thin film and have a reduced packing density.

Any metal stable within a battery can be used as a current collector. Aluminum is preferred for a positive electrode, and copper is preferred for a negative electrode. The current collector can be foil, net, expanded metal, etc.

The separator fixed to the positive electrode and that fixed to the negative electrode may be of different kinds. For example, one of the separators can have a higher strength and a larger through-hole diameter, while the other can have excellent melting properties in case of a temperature rise. By this manipulation, adhesion by pressure and heat application can be carried out with ease, and mechanical strength and ion conductivity can be secured.

The lithium ion battery according to the invention will now be illustrated in greater detail with reference to Examples, but the invention is by no means limited thereto.

### EXAMPLE 1

### Preparation of positive electrode:

A positive electrode active material paste prepared from 87% by weight of LiCoO₂, 8% by weight of graphite powder (KS-6, produced by Lonza Ltd.), and 5% by weight of polyvinylidene fluoride (KF1100, produced by Kureha Chemical Ind. Co., Ltd.) was applied to 20 µm thick aluminum foil, a current collector, by a doctor blade coating method to a coating thickness of about 100 µm to form a positive electrode.

### Preparation of negative electrode:

A negative electrode active material paste prepared from 95% by weight of Mesophase Microbeads Carbon (produced by Osaka Gas Co., Ltd.) and, as a binder, 5% by weight of polyvinylidene fluoride (KF1100, produced by Kureha Chemical Ind. Co., Ltd.) was applied to 12 µm thick copper foil, a current collector, by a doctor blade coating method to a coating thickness of about 100 µm to form a negative electrode.

### Preparation of battery:

A piece 5 cm by 4 cm was cut out each of the positive and negative electrodes, and a terminal for current collection was attached thereto. Two pieces 11 cm by 5 cm were cut out of a separator (Cell Guard #2400, produced by Hoechst Celanese) and folded lengthwise with edges even, and the positive electrode and the negative electrode were inserted into the folds each. The edges of each folded separator were joined together with an adhesive (Scotch-Grip 4693, produced by Sumitomo 3M Ltd.). These electrodes were superposed, put in a bag made of an aluminum laminate film, fixed, and thoroughly dried. An electrolytic solution prepared by dissolving lithium hexafluorophosphate (produced by Tokyo Kasei Kogyo K.K.) in a 1:1 (by mole) mixed solvent of ethylene carbonate (produced by Kanto Kagaku K.K.) and 1,2-dimethoxyethane (produced by Wako Pure Chemical Ind., Ltd.) in a concentration of 1.0 mol/dm³ was poured into the bag, and the aluminum laminate film was heat-sealed to complete a battery.

The resulting battery had a weight energy density of 80 Wh/kg. The charge capacity even after 200 charge and discharge cycles at a current of C/2 was as high as 90% of the initial value.

### EXAMPLE 2

A separator (Cell Guard #2400, produced by Hoechst Celanese) cut to 5 cm by 4 cm was spray-coated with a small amount of a diluted adhesive (Scotch-Grip 4693, produced by Sumitomo 3M Ltd.) and stuck to the facing side of each of the same positive and negative electrodes as prepared in Example 1, which had been cut to 5 cm by 4 cm and to which a current collecting terminal had been attached. Then, the two electrodes having the respective separators on their facing sides were superposed with their separators in contact, put in a bag made of an aluminum laminate film, fixed, and thoroughly dried. The same electrolytic solution as used in Example 1 was poured into the bag, and the aluminum laminate film was heat-sealed to complete a battery.

The resulting battery had a weight energy density of 106 Wh/kg. The charge capacity even after 200 charge and discharge cycles at a current of C/2 was 60% of the initial value.

### EXAMPLE 3

The same electrodes as prepared in Example 2, which had the respective separators on their facing sides, were used. A small mount of an adhesive (Scotch-Grip 4693, produced by Sumitomo 3M Ltd.) was applied to the separator adhered to the positive electrode, and the coated separator was brought into contact with the separator adhered to the negative electrode, thereby to adhere the positive electrode and the negative electrode. The laminate electrode body was put in a bag made of an aluminum laminate film and thoroughly dried. The same electrolytic solution as used in Example 1 was poured into the bag, and the aluminum laminate film was heat-sealed to complete a battery.

The resulting battery had a weight energy density of about 100 Wh/kg. The charge capacity even after 200 charge and discharge cycles at a current of C/2 was 60% of the initial value.

### EXAMPLE 4

A 10 wt% solution of polyvinylidene fluoride (KF1100, produced by Kureha Chemical Ind. Co., Ltd.) in N-methylpyrrolidone (NMP) was applied to the facing surfaces of the same positive and negative electrodes as used in Example 1, which had been cut to 5 cm by 4 cm and to which a current collecting terminal had been attached. A separator (Cell Guard #2400, produced by Hoechst Celanese) cut to 5 cm by 4 cm was adhered to each of the coated sides, followed by drying in vacuo to adhere the electrodes and the respective separators. The polyvinylidene fluoride solution was applied to the separator of the positive electrode, and the separator of the negative electrode was stuck thereto. The laminate was dried in vacuo to adhere the two electrodes. The resulting electrode body was put in a bag made of an aluminum laminate film. After thorough drying, the same electrolytic solution as used in Example 1 was poured into the bag, and the aluminum laminate film was heat-sealed to complete a battery.

The resulting battery had a weight energy density of about 80 Wh/kg. The charge capacity even after 200 charge and discharge cycles at a current of C/2 was 65% of the initial value.

### EXAMPLE 5

A polyethylene film was stretched to prepare a porous polyethylene film. A 10 wt% solution of polyvinylidene fluoride (KF1100, produced by Kureha Chemical Ind. Co., Ltd.) in NMP was applied to both sides of the porous film. The double-coated film was inserted between two separators, one adhered to a positive electrode and the other to a negative electrode, which were prepared in the same manner as in Example 4. The laminate was dried in vacuo to adhere the two electrodes. The resulting electrode body was put in a bag made of an aluminum laminate film. After thorough drying, the same electrolytic solution as used in Example 1 was poured into the bag, and the aluminum laminate film was heat-sealed to complete a battery.

The resulting battery had a weight energy density of about 75 Wh/kg. The charge capacity even after 200 charge and discharge cycles at a current of C/2 was 50% of the initial value.

### EXAMPLE 6

A positive electrode and a negative electrode having the respective separators, which were prepared in the same manner as in Example 2, were superposed on each other and passed through a roll press set at 95°C and 5 kg/cm², whereby the separators were adhered to each other in so far as the flatness of the electrode surfaces was maintained sufficiently. The resulting laminate was dried at 80°C in vacuo and put in a bag made of an aluminum laminate film. After thorough drying, the same electrolytic solution as used in Example 1 was poured into the bag, and the aluminum laminate film was heat-sealed to complete a battery.

The resulting battery had a weight energy density of about 80 Wh/kg. The charge capacity even after 200 charge and discharge cycles at a current of C/2 was 60% of the initial value.

### EXAMPLE 7

A positive electrode and a negative electrode each having a separator, which were prepared in the same manner as in Example 4, were superposed on each other with a porous polyethylene film interposed therebetween. The porous polyethylene film was prepared by stretching a polyethylene film and subjected to a plasma treatment immediately before use. The laminate was passed through a roll press at 95°C and 5 kg/cm² to adhere them to each other. The resulting laminate was dried at 80°C in vacuo and put in a bag made of an aluminum laminate film. After thorough drying, the same electrolytic solution as used in Example 1 was poured into the bag, and the aluminum laminate film was heat-sealed to complete a battery.

The resulting battery had a weight energy density of about 60 Wh/kg. The charge capacity even after 200 charge and discharge cycles at a current of C/4 was about 60% of the initial value.

### EXAMPLE 8

While the foregoing Examples have explained preparation of a single layer type lithium ion battery having a single laminate electrode body in which a positive electrode and a negative electrode are facing each other with a separator therebetween, a multilayer type lithium ion battery having a plurality of such electrode bodies can be produced similarly.

In the following is described a process for producing a multilayer type lithium ion battery having a tabular laminated structure as shown in Fig. 1, in which positive electrodes 1 and negative electrodes 2, having adhered on each side thereof separators 10 and 20, respectively, alternate.

### Preparation of positive electrode:

A positive electrode active material paste prepared from 87% by weight of LiCoO₂, 8% by weight of graphite powder (produced by Lonza Ltd.), and 5% by weight of polyvinylidene fluoride (KF1100, produced by Kureha Chemical Ind. Co., Ltd.) was applied by a doctor blade coating method to a coating thickness of 300 µm to form an active material film of band form. A 30 µm thick aluminum net of band form, which was a positive electrode current collector, was placed thereon, and the positive electrode active material paste was again spread on the net with a doctor blade coating method to a thickness of 300 µm. The double-coated aluminum net was allowed to stand in a drier kept at 60°C for 60 minutes to make the paste half-dried. The resulting laminate was rolled to a thickness of 400 µm to obtain a positive electrode 1 of band form having active material layers on the current collector.

### Preparation of negative electrode:

A negative electrode active material paste prepared from 95% by weight of Mesophase Microbeads Carbon (a trade name, produced by Osaka Gas Co., Ltd.) and 5% by weight of polyvinylidene fluoride (KF1100, produced by Kureha Chemical Ind. Co., Ltd.) was applied in a doctor blade coating method to a thickness of 300 µm to make an active material film of band form. A 20 µm thick copper net of band form, a negative electrode current collector, was placed thereon, and the negative electrode active material paste was again spread thereon with a doctor blade coating method to a thickness of 300 µm. The laminate was allowed to stand in a drier at 60°C for 60 minutes to make the paste half-dried. The resulting laminate was rolled to a thickness of 400 µm to prepare a negative electrode 2 of band form having active material layers on the current collector.

### Preparation of battery:

A 10 wt% solution of polyvinylidene fluoride (KF1100, produced by Kureha Chemical Ind. Co., Ltd.) in NMP was applied to a side of two unrolled continuous porous polypropylene sheets (Cell Guard #2400, produced by Hoechst Celanese) as separators 10. The positive electrode 1 of band form was interposed between the coated sides of the separators, and they were brought into contact to be joined together, followed by drying in vacuo.

Similarly, a 10 wt% solution of polyvinylidene fluoride (KF1100, produced by Kureha Chemical Ind. Co., Ltd.) in NMP was applied to a side of two unrolled continuous porous polypropylene sheets (Cell Guard #2400, produced by Hoechst Celanese) as separators 20. The negative electrode 2 of band form was interposed between the coated sides of the separators, and they were brought into contact to be joined together, followed by drying in a vacuum.

The positive electrode 1 and the negative electrode 2 each having the separator on both sides thereof were cut to prescribed size. A 10 wt% solution of polyvinylidene fluoride (KF1100, produced by Kureha Chemical Ind. Co., Ltd.) in NMP was applied to one of the separators 10 on a cut piece of the positive electrode 1 (or negative electrode), and one of the separators 20 on a cut piece of the negative electrode 2 (or positive electrode) was stuck thereto. Then, the same adhesive was applied to one of the separators 10 on another cut piece of the positive electrode 1 (or negative electrode), and the coated side was stuck to the other separator 20 of the negative electrode 2 (or positive electrode) that had previously been adhered. These steps were repeated to form a battery body having a plurality of laminate electrode bodies. The battery body was dried in vacuo while applying pressure to obtain a battery structure having a tabular laminated structure as shown in Fig. 1.

A current collecting tab was connected to the end of every positive electrode and every negative electrode, and the tabs were spot welded among positive electrodes and among negative electrodes to establish electrical parallel connection in the tabular laminated battery body.

The tabular laminated battery body was immersed in an electrolytic solution prepared by dissolving lithium hexafluorophosphate in a 1:1 (by mole) mixed solvent of ethylene carbonate and dimethyl carbonate in a concentration of 1.0 mol/dm³. The impregnated battery body was heat-sealed into a bag made of an aluminum laminate film to complete a lithium ion secondary battery having a tabular laminated battery body.

### EXAMPLE 9

In the following is described a process for producing a multilayer type lithium ion battery having a tabular roll type laminated structure as shown in Fig. 2 by using the same electrodes as prepared in Example 8. In Fig. 2, a positive electrode 1 and a negative electrode 2 each having a separator adhered to both sides were rolled up so that they might alternate in the battery body. Preparation of battery:

A positive electrode 1 and a negative electrode 2 each having a separator adhered to both sides were prepared in the same manner as in Example 8.

The same adhesive as used in Example 8 was applied to one of a pair of separators of band form having the positive electrode 1 (or negative electrode) joined therebetween. One end of the positive electrode 1 having separators was folded back at a prescribed length while inserting the negative electrode 2 (or positive electrode) having separators into the fold. The inserted negative electrode was folded and adhered with the adhesive in such a manner that the folded end of the positive electrode 1 (or negative electrode) might be wrapped in. Then, the positive electrode 1 and the negative electrode 2 were rolled up simultaneously while adhering their separators with the adhesive to form a battery body having a plurality of laminated electrode bodies. The battery body was dried in a vacuum while applying pressure to obtain a battery structure having a tabular roll type laminated structure as shown in Fig. 2.

### Industrial Applicability

The battery of the invention can be used as a secondary battery in portable electronic equipment, such as portable personal computers and cellular phones. The invention realizes size and weight reduction and freedom of shape design of batteries as well as improvement on battery performance.

## Claims

1. A process for producing a lithium ion battery having a positive electrode and a negative electrode facing each other via a separator, the process comprising the steps of:
separately fixing separators to a positive electrode and a negative electrode so as to cover at least the surfaces facing each other; and
fixing the separator-covered positive and negative electrodes together with their separators in contact with each other.

2. A process for producing a lithium ion battery according to claim 1, wherein the positive and the negative electrodes and the respective separators are fixed together by adhesion.

3. A process for producing a lithium ion battery according to claim 2, wherein the adhesion between the positive and the negative electrodes and the respective separators is carried out with a homo- or copolymer of vinylidene fluoride or vinyl alcohol.

4. A process for producing a lithium ion battery according to claim 1, wherein the separators in contact with each other are adhered to each other.

5. A process for producing a lithium ion battery according to claim 4, wherein the separators are adhered to each other via a film having a plurality of holes.

6. A process for producing a lithium ion battery according to claim 4, wherein the separators are adhered to each other by applying heat and pressure.

7. A lithium ion battery comprising a laminate electrode body having:
a positive electrode;
a negative electrode;
at least two separators between the positive and the negative electrodes; and
a plurality of adhesive layers between each of the positive and the negative electrodes and the respective separators and between at least the two separators.

8. A lithium ion battery according to claim 7, having a plurality of said laminate electrode bodies.

9. A lithium ion battery according to claim 8, wherein said plurality of laminate electrode bodies are formed by alternately building up a positive electrode and a negative electrode each having a separator on both sides thereof.

10. A lithium ion battery according to claim 8, wherein said plurality of laminate electrode bodies are formed by rolling up a positive electrode and a negative electrode each having a separator on both sides thereof in such a manner that positive electrodes and negative electrodes alternate in the resulting laminate.
